Europäisches Patentamt

European Patent Office

Office européen des brevets

(11) Publication number: **0 296 446**
**A2**

# EUROPEAN PATENT APPLICATION

(21) Application number: 88109406.4

(22) Date of filing: 14.06.88

(51) Int. Cl.4: **B29C 67/14 , C08J 5/00**

(30) Priority: 26.06.87 IT 6755387

(43) Date of publication of application:
**28.12.88 Bulletin 88/52**

(84) Designated Contracting States:
**BE DE ES FR GB IT SE**

(71) Applicant: **PIANFEI IPA S.p.A.**
**Via Cuneo, 27**
**I-12080 Pianfei (Province of Cuneo)(IT)**

(72) Inventor: **Mondini, Lino**
**Via Cuneo 38**
**I-12080 Pianfei Cuneo(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Process for manufacturing moldable, rigid and semirigid elements, in particular lightweight, selfsupporting and soundproofing articles.**

(57) This process consists of impregnating with a solution of phenoplasts a support made of open-cell spongy material interposed between two layers of glass fibers continuously coupled to the support; heating the composite material, obtained from the impregnation and coupling steps, to the solvent evaporation temperature, and cutting the dried material after the evaporation of the solvent, in order to obtain a storable semifinished product which can be directly heat molded.

Fig. 1

EP 0 296 446 A2

# PROCESS FOR MANUFACTURING MOLDABLE, RIGID AND SEMIRIGID ELEMENTS, IN PARTICULAR LIGHTWEIGHT, SELF-SUPPORTING AND SOUNDPROOFING ARTICLES

The present invention relates to a process for manufacturing moldable, rigid and semirigid elements, and in particular moldable, lightweight, self-supporting and soundproofing articles which can be obtained by means of the present process such as is apparent from the following description.

A typical use of the articles which can be obtained with the process according to the present invention is represented by the covering and fitting elements for the interior of motor vehicles, such as, in particular, the self-supporting covering of the ceiling of the roof, the panels of the doors, the parts under the rear windows, the wheelhouse coverings for the luggage van and in general all the covering and fitting elements in which low weight, soundproofing ability and self-supporting ability, that is the ability to support their own weight without the need for auxiliary supporting structures, are required.

Lightweight and moldable materials adapted for the production of panels and articles as specified are already known.

In particular, a moldable material is known which consists of a sandwich of two layers of glass fibers impregnated with polyurethane resin wherebetween a soundproofing porous material is interposed.

In the previous European patent application, publication No. 0251267, by the same Applicant, a process is described for the production of a material of this type, characterized by a first step in which a semifinished article is produced, consisting of a mat of glass fibers impregnated with thermoactivatable polyurethane resin which - after drying - is rolled and stored, and by a second and subsequent step in which a soundproofing and spacer material is interposed between two mats resulting from the treatment according to the first step. The thus obtained sandwich is then cut and each piece is introduced in the related forming mold, where by virtue of adequate heating the activation of the resin is caused; said resin, reacting irreversibly, assumes the necessary and required characteristics of rigidity and resistance to humidity and temperature.

Said known process has, with respect to the prior art, in particular with respect to the process described in the U.S. patent 4.451.310, considerable advantages and in particular the advantage of allowing a continuous preparation of the semifinished article resulting from the first operative step, but still has some disadvantages deriving from the nature of the impregnating resin, which should be mixed to adapted inhibitors or catalysts or heat-threshold blockers, and from the further processing of the semifinished material for the execution of the second step before molding.

Moreover, spraying two-component polyurethane resin (polyole-isocyanate) requires accurate washes of the spraying nozzle at the end of each work cycle and adequate protections in order to prevent the pollution of the work environment.

These disadvantages entail a complication of the plants and therefore increased installation and production costs.

The aim of the present invention is to eliminate the disadvantages of the prior art processes.

In particular, an object of the present invention is to provide a fully continuous process for making lightweight, self-supporting and soundproofing material, capable of producing a semifinished material which can be stored and directly used for the only subsequent molding step for obtaining the finished article.

Another object of the present invention is to provide a continuous process capable of producing a low-cost product which at the same time has excellent self-supporting, soundproofing and lightweight characteristics.

Still another object of the present invention is to provide a process capable of allowing a radical simplification of the plants, with consequent reductions in the installation and production costs.

In order to achieve this aim, these important objects and others which will become apparent from the following detailed description, the present invention relates to a process for manufacturing moldable, rigid and semirigid elements, as defined in independent claim 1.

According to the invention, the impregnating solution consists of a not foamable, thermosetting phenolformaldehyde resin such as novolac, and the spongy support is selected among the following foamed plastic materials: polyurethanes, polyesters, polycondensates.

According to an embodiment of the process, the following operative mode is used: an open-cell spongy support is continuously unrolled from a roller and coupled to a first lower mat of glass fibers, the visible face whereof is preferably protected by a disposable film of thermoplastic material. The phenolformaldehyde resin, dissolved in solvent, for example methyl alcohol, is sprayed on the upper face of the spongy support, and thereafter this face is covered by a second upper mat of glass fibers, so that the spongy support is comprised between said first and second glass fiber mats. Advantageously, a layer of card fleece (vlies) is deposited on the exposed face of the second upper mat and the whole undergoes squeezing so as to be impregnated, and is introduced into a heating oven where the total evaporation of the solvent is obtained at the temperature of approximately 80° C. The material which is removed from the oven is subsequently cut and stacked in the form of panels ready for molding.

According to a different embodiment of the process, the spongy support, continuously unrolled from a roll, is superimposed on a first layer of glass fibers, deposited, by cutting a bundle roving, on a supporting film; the spongy support is subsequently sprayed with phenolformaldehyde resin, then a second layer of glass fibers is deposited, this second layer is covered with a protective film, and squeezing and heating are performed to evaporate the solvent.

Further characteristics, objects and advantages of the present invention will become apparent from the following detailed description of some embodiments of the process given with reference to the accompanying drawings, provided only by way of non-limitative example, wherein:

- fig. 1 is a diagram of a plant for the execution of the process according to an embodiment of the invention,

- fig. 2 is the similar diagram of a different plant for the execution of the process according to a different embodiment of the invention.

## Example I

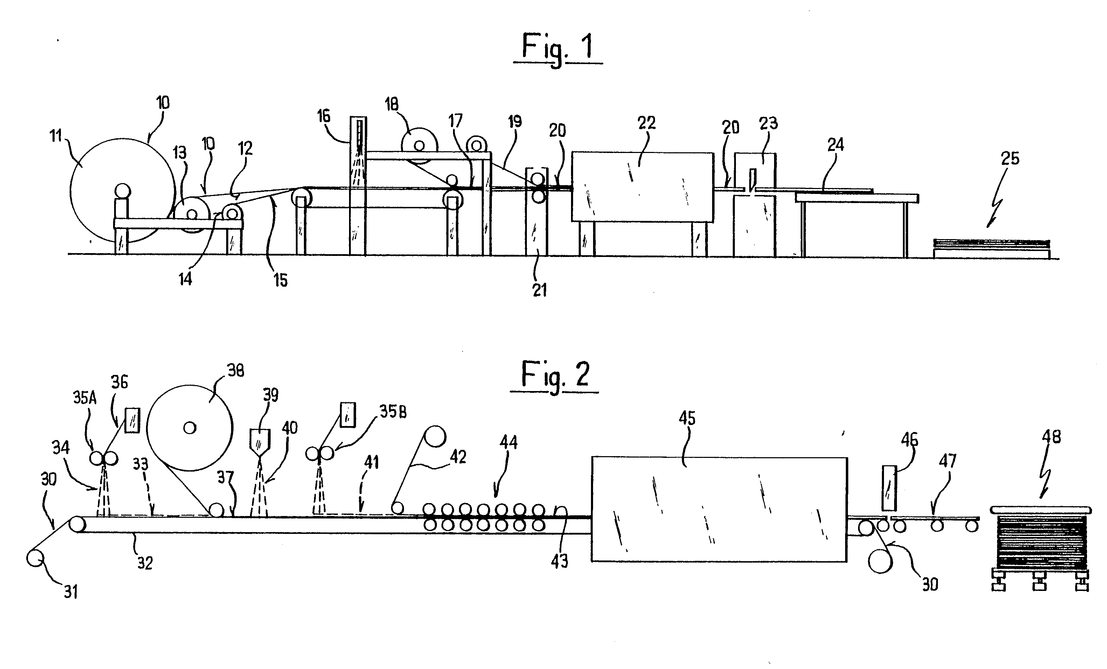

With reference to fig. 1, a support 10 of open-cell spongy material, for example of the material known under the tradename "Moltopren", is continuously unrolled from a roll 11 and coupled to a first mat 12 of glass fibers, also continuously unrolled from a corresponding roll 13. Preferably, the thickness and the consistence of the first glass fiber mat 12 are selected so that its unit weight is comprised between 90 and 110 g/sq.m. The mutual arrangement of the rollers 11 and 13 is such that the first mat 12 is coupled to the lower face of the spongy support while a third roller 14 feeds the lower face of the first mat 12 with a disposable protective film 15, consisting for example of thermoplastic material such as polyethylene.

The band composed by the film 15, by the first mat 12 of glass fibers and by the spongy support 10 is caused to continuously pass under a sprayer 16 of phenolformaldehyde resin in alcohol solution having a phenol/formaldehyde ratio by weight greater than 1 (novolac resin type). In particular an alcoholic solution of 1.4 parts of fenol and 1.2 parts of formaldehyde has given the best results, and ratios comprised between 1.1 and 1.5 have proved suitable for the intended use.

Downstream of the sprayer 16, a second mat 17 of glass fibers, also continuously unrolled from a corresponding roll 18, is applied to the upper face of the spongy support 10, and a thin layer 19 of card fleece having for example a unit weight of 18g/sq.m. is applied to the upper surface of said second mat 17, mainly in order to retain the impregnating resin. The structure formed by the above described superimposed layers, now termed composite band and indicated at 20, is subsequently treated by a roller squeezing device 21 adapted to produce the correct diffusion of the impregnation resin inside the support 10 and the mats 12, 17.

After the squeezing-impregnation step, the composite band 20 is introduced in a drying oven 22, thermostated at approximately 80° C and possibly ventilated, wherein the complete evaporation of the solvent is produced. At the exit from the oven 22, a transverse cutter 23 cuts the band 20 into panels 24 which are superimposed in stacks 25 to be subsequently molded in chill molds where, at the temperature of 180° C, the phenolformaldehyde resin is irreversibly hardened and the finished product is obtained.

It should be noted that the molding step can be even considerably subsequent to the one of cutting into panels, so that the stacks 25 of panels may be stored even for more than 30 days without the need for particular provisions for preservation.

## Example II

With reference to figure 2, a lower film 30 of thermoplastic material, for example polyethylene, is continuously unrolled from a roll 31 and laid on a conveyor belt 32. A layer 33 of glass fibers 34, obtained by cutting a bundled and continuous roving 36, by means of a roller device 35A, is deposited on said film. A support 37 of open-cell spongy material, for example spongy polyurethane, is continuously unrolled from a roll 38 and superimposed on the layer 33. Phenolformaldehyde resin 40 in alcohol solution, having the same composition as in the preceding example, is subsequently sprayed onto the support 37 by means of a sprayer 39. A second layer 41 of glass fibers is subsequently deposited by means of a roller device 35B and a gauze veil or the like (vlies) having a unit weight comprised between 16 and 20 g/sq.m. is deposited thereon. The resulting composite band, indicated at 43, subsequently undergoes squeezing by means of a roller device 44 and is sent to a drying oven 45, thermostated to approximately 80° C and possibly ventilated, where the solvent is completely dried off. At the exit from the oven 45, the lower film 30 is first removed and subsequently a cutter 46 cuts the band 41 into panels or pieces 47 which are superposed in a stack 48.

Example III

The process is similar to that of Example I or of Example II, using a polyester spongy material for the support 10, or respectively, 37.

Example IV

The process is similar to that of Example I or of Example II, using a phenolic spongy material for the support 10, or respectively, 37.

Of course, the concept of the invention being invariant, the details of execution of the process may be extensively varied with respect to what has been described and illustrated by way of non-limitative example, without thereby abandoning the scope of the invention.

Where technical features mentioned in any claims are followed by reference signs, those reference signs have been included for the sole purpose of increasing the intelligibility of the claims and accordingly, such reference signs do not have any limiting effect on the scope of each element identified by way of example by such reference signs.

Claims

1. A process for manufacturing moldable, rigid and semirigid elements, comprising the steps of impregnating with a resin composition a support of open-cell spongy material interposed between two glass fiber layers continuously coupled to said support; heating the composite material, resulting from the impregnation and coupling steps; and cutting the dried material, characterized in that said resin composition is a not foamable thermosetting solution of phenolformaldehyde resins having a phenol/formaldehyde ratio by weight > 1 and that the composite material is heated to the solvent evaporation temperature to obtain a storable semifinished material which can be directly heat-molded.

2. A process according to claim 1, characterized in that said ratio is comprised between 1.1 and 1.5.

3. A process according to Claim 1, characterized in that the spongy support is selected among the following foamed plastic materials: polyurethanes, polyesters, polycondensates.

4. A process according to one or more of claims 1 to 3, wherein the solvent of the impregnation composition is an alcohol.

5. A process according to one or more of claims 1 to 4, characterized in that it comprises the following operative steps in sequence:
- continuously unrolling a band of open-cell spongy material from a feed roll;
- continuously coupling a first mat of glass fibers to said support of spongy material;
- spraying an upper surface of said support of spongy material with an alcoholic solution of phenolformaldehyde resin;
- continuously superimposing a second glass fiber mat on said support of spongy material to obtain a composite band;
- covering said second mat with a layer of card fleece;
- squeezing said composite band for impregnating the composite band with said phenolformaldehyde resin;
- heating the composite band in a continuous oven until complete evaporation of the solvent;
- cutting said composite band in pieces which are storable and heat-moldable.

6. A process according to one or more of claims 1 to 4, characterized in that the open-cell spongy material, continuously unrolled from a roll, is superimposed on a first layer of glass fibers deposited by cutting a roving on a supporting film; a phenolformaldehyde resin is sprayed onto said spongy material and a second layer of glass fibers obtained by cutting a roving is deposited on said spongy material obtaining a composite band; said composite band is covered by a protective film, squeezed for impregnating the layers, and subject to heating to evaporate the solvent; the dried band being subsequently cut into panels which are storable and heat-moldable.

7. A process according to one or more of claims 1 to 6, characterized in that the solvent is methyl alcohol.

8. A process according to one or more of claims 1 to 7, characterized in that the drying temperature of the composite band is comprised between 50° and 90° C.

9. A product derived from the process according to claim 1 and any one of claims 2 to 8, characterized in that it consists of a heat-moldable material which includes a spongy support interposed between two layer of glass fibers and in that said support and said layers are impregnated with a dried phenolformaldehyde resin having a phenol/formaldehyde ratio by weight > 1.

Fig. 1

Fig. 2

EP 0 296 446 A2